# EUROPÄISCHE PATENTANMELDUNG

(11) **EP 4 435 046 A1**
(43) Veröffentlichungstag der Anmeldung: **25.09.2024**
(21) Anmeldenummer: 24162971.6
(22) Anmeldetag: 12.03.2024
(51) Int. Cl.: C08K 7/16, C08K 9/04, C08K 13/06, C08L 83/04, C08K 3/22

(54) **PYROGENES ALUMINIUMOXID ALS ANTIABSETZMITTEL IN WÄRMELEITMISCHUNGEN AUF POLYMERBASIS**

(30) Priorität: 22.03.2023 EP 23163355
(71) Anmelder: Evonik Operations GmbH, 45128 Essen (DE)
(72) Erfinder: Pisula, Wojciech, 55131 Mainz (DE); Wissler, Gerald, 63533 Mainhausen (DE); Moussaoui, Aziz, 63571 Gelnhausen (DE); Giesseler, Mareike, 63477 Maintal (DE); Schmidt, Franz, 64521 Groß-Gerau (DE); Huth, Michael, 63477 Maintal (DE); Becker, Patrick, 64380 Roßdorf (DE); Tontrup, Christoph, 63755 Alzenau (DE)
(74) Vertreter: Evonik Patent Association

(57) **Zusammenfassung**

Die vorliegende Erfindung betrifft eine Zusammensetzung umfassend wenigstens ein Präpolymer, thermisch leitfähige Partikel und Partikel aus pyrogenem Aluminiumoxid mit einer BET-Oberfläche von 15 m²/g bis 200 m²/g. Die Erfindung betrifft außerdem ein Verfahren zur Herstellung einer Wärme leitenden Zusammensetzung umfassend den Schritt des Hinzufügens von pyrogenem Aluminiumoxid mit dieser BET-Oberfläche zu der Zusammensetzung. Zusätzlich betrifft die vorliegende Erfindung die Verwendung von pyrogenem Aluminiumoxid mit einer BET-Oberfläche von 15 m²/g bis 200 m²/g zur Verringerung der Sedimentation von thermisch leitfähigen Partikeln in Polymerzusammensetzungen.

## Beschreibung

### TECHNISCHES GEBIET

Die vorliegende Erfindung betrifft eine Zusammensetzung umfassend wenigstens ein Präpolymer, thermisch leitfähige Partikel und Partikel aus pyrogenem Aluminiumoxid mit einer BET-Oberfläche von 15 m²/g bis 200 m²/g. Die Erfindung betrifft außerdem ein Verfahren zur Herstellung einer thermisch leitfähigen Polymerzusammensetzung umfassend den Schritt des Hinzufügens von pyrogenem Aluminiumoxid mit einer BET-Oberfläche von 15 m²/g bis 200 m²/g zu der Zusammensetzung. Zusätzlich betrifft die vorliegende Erfindung die Verwendung von pyrogenem Aluminiumoxid mit einer BET-Oberfläche von 15 m²/g bis 200 m²/g zur Verringerung der Sedimentation von thermisch leitfähigen Partikeln in Polymerzusammensetzungen.

### TECHNISCHER HINTERGRUND

Thermisch leitfähige Kunststoffe finden in vielen technischen Bereichen Anwendung, in denen eine effiziente Wärmeleitung erforderlich ist. Darunter fallen insbesondere Verkleidungen von elektronischen Bauteilen und elektrische Isolatoren, welche auf kleinstem Raum große Mengen Wärme erzeugen. Um die Funktionssicherheit und eine ausreichende Lebensdauer dieser Bauteile zu gewährleisten, muss die entstehende Wärme effizient abgeführt werden. Für eine optimale Wärmeableitung sollten darüber hinaus auch Verbund- und Klebstoffe oder Füllmassen, die bei der Konstruktion dieser Verkleidungen bzw. Bauteile zum Einsatz kommen, thermisch leitend sein. Daher werden solche Bauteile häufig aus Kunststoffen hergestellt, die ein oder mehrere Präpolymer(e) umfassen, die in flüssigem oder viskosem Zustand zusammen mit diversen Zuschlags- und Füllstoffen miteinander vermischt werden, bevor sie zu dem fertigen Polymerwerkstoff ausgehärtet werden.

Dabei ist aus dem Stand der Technik bekannt, dass die thermische Leitfähigkeit mit dem Anteil von thermisch leitenden Füllstoffen in der Zusammensetzung ansteigt. Bei niedrig bis mittelgefüllten und leicht fließfähigen Formulierungen ist die Sedimentation besonders ausgeprägt. Dies ist auf die deutlich unterschiedlichen Dichten des Füllstoffs einerseits, und des Präpolymers andererseits zurückzuführen. So hat beispielsweise das im Stand der Technik für seine thermische Leitfähigkeit bekannte Aluminiumoxid eine Dichte von 3,5 bis 4 g/cm³, zur Herstellung thermisch leitender Kunststoffe eingesetzte Präpolymere jedoch nur eine Dichte von etwa 0,8 g/cm³ bis 2 g/cm³.

Eine Sedimentation ist jedoch unerwünscht, da es zu einer ungleichmäßigen thermischen Leitung des fertigen Produktes kommt, was im Betrieb zu Schäden am fertigen Bauteil oder zu insgesamt verringerter Effizienz der Wärmeleitung führen kann. Dies wiederrum kann die Funktionssicherheit und die Lebensdauer der gesamten technischen Anlage, in der das Bauteil verbaut ist, beinträchtigen.

Im Stand der Technik ist zur Verringerung des Sedimentationsverhaltens der Einsatz von pyrogener Kieselsäure in wärmeleitenden Zusammensetzungen bekannt. Dieser Hilfsstoff hat jedoch den Nachteil, dass er die thermische Leitfähigkeit des fertigen Produktes negativ beeinflusst. Weitere Antiabsetzstoffe sind beispielsweise aus der CN 104 693 806 A bekannt. Dieses Dokument offenbart zwar eine Reihe von Antiabsetzstoffen, gibt jedoch weder einen Hinweis auf besonders vorteilhafte Eigenschaften einzelner Antiabsetzstoffe, noch auf spezifische Merkmale dieser Antiabsetzstoffe, die für den beabsichtigten Einsatzzweck besonders relevant wären.

Ein weiterer Nachteil von im Stand der Technik bekannten Antiabsetzstoffen ist, dass diese negativen Auswirkungen auf die Rheologie der Zusammensetzung vor ihrem Aushärten haben. So kann die die Zugabe von bekannten Antiabsetzstoffen die Viskosität bei hohen Scherraten soweit erhöhen, dass die Dosierbarkeit beeinträchtigt wird. Eine schlechte Dosierbarkeit sorgt für einen höheren Aufwand bei der Herstellung des gewünschten Endproduktes, was die Herstellung des jeweiligen Produktes weniger ressourcen- und kosteneffizient macht. Zusätzlich beeinträchtigt eine hohe Viskosität das Fließverhalten beim Auftragen der Zusammensetzung auf eine Oberfläche oder beim Injizieren der Zusammensetzung in eine Form oder einen Spalt, sodass eine gleichmäßige Verteilung der Zusammensetzung vor dem Aushärten nicht gewährleistet werden kann. Eine ungleichmäßige Verteilung der Zusammensetzung führt zu einer unzureichenden oder sogar vollständig ausbleibenden Wärmeableitung.
WO 2009/032212 offenbart eine Zusammensetzung mit hohen Anteilen an pyrogenem Aluminiumoxid (mind. 5 Gew.-% bis 80 Gew.-%). In dem genannten Dokument geht es gerade um die Erreichung hoher Füllgrade, die Eigenschaften der Zusammensetzung im Hinblick auf Sedimentation sind nicht Gegenstand der Offenbarung.

Es besteht somit ein Bedarf nach einem effizienten und spezifischen Antiabsetzstoff. Ein solcher Stoff ist dann effizient, und demensprechend kostengünstiger und ressourcenschonender, wenn ein starker Effekt durch eine geringe Zugabe des Additivs erreicht werden kann. Ein solcher Stoff ist dann spezifisch, wenn er speziell das Absedimentieren verringert oder vollkommen verhindert, ohne dass die Verarbeitbarkeit, die Dosierbarkeit und die Wärmeleitfähigkeit der Formulierung, im Vergleich zur Verwendung im Stand der Technik bekannter Antiabsetzstoffe, wie beispielsweise pyrogener Kieselsäue, leiden.

Es war daher die Aufgabe der vorliegenden Erfindung, einen Antiabsetzstoff für thermisch leitende Zusammensetzungen bereitzustellen, der sowohl effizient und spezifisch wirkt, wobei insbesondere bei niedrigen bis mittleren Anteilen thermisch leitfähiger Partikel, die Sedimentation dieser Partikel verringert oder gänzlich verhindert werden sollte.

### ZUSAMMENFASSUNG

Überraschenderweise wurde gefunden, dass diese Aufgabe durch die Einarbeitung von pyrogenem Aluminiumoxid mit einer BET-Oberfläche von 15 m²/g bis 200 m²/g mit einem Anteil von weniger als 5 Gew.-%, bezogen auf die Zusammensetzung, in eine Zusammensetzung gelöst werden kann.

Gegenstand der vorliegenden Erfindung ist daher eine Zusammensetzung umfassend thermisch leitfähiger Partikel, dadurch gekennzeichnet, dass die Zusammensetzung zusätzlich pyrogenes Aluminiumoxid mit einer BET-Oberfläche von 15 m²/g bis 200 m²/g mit einem Anteil von weniger als 5 Gew.-%, bezogen auf die Zusammensetzung, umfasst.

Ein weiterer Gegenstand der vorliegenden Erfindung ist ein Verfahren zur Herstellung einer thermisch leitfähigen Polymerzusammensetzung, dadurch gekennzeichnet, dass das Verfahren einen Schritt des Hinzufügens von weniger als 5 Gew.-%, bezogen auf die Zusammensetzung, pyrogenem Aluminiumoxid mit einer BET-Oberfläche von 15 m²/g bis 200 m²/g zu der Zusammensetzung umfasst.

Außerdem Gegenstand der Erfindung ist die Verwendung von pyrogenem Aluminiumoxid mit einer BET-Oberfläche von 15 m²/g bis 200 m²/g zur Verringerung der Sedimentation von thermisch leitfähigen Partikeln in Polymerzusammensetzungen.

### DETAILLIERTE BESCHREIBUNG

Sofern nicht anders angegeben, sind die in der folgenden Beschreibung und den beigefügten Ansprüchen angegebenen numerischen Parameter und Bereiche Näherungswerte. Dementsprechend können, sofern nicht ausdrücklich etwas anderes angegeben ist, alle Zahlen, die Werte, Bereiche, Mengen oder Prozentsätze ausdrücken, so gelesen werden, als ob ihnen das Wort "ungefähr" vorangestellt wäre, selbst wenn der Begriff nicht ausdrücklich vorangestellt ist. Ungeachtet der Tatsache, dass es sich bei den Zahlenbereichen und Parametern, die den breiten Anwendungsbereich der Erfindung beschreiben, um Näherungswerte handelt, werden die Zahlenwerte in den spezifischen Beispielen so genau wie möglich angegeben. Alle Zahlenwerte enthalten jedoch Fehler, die sich zwangsläufig aus der Standardabweichung ihrer jeweiligen Messung ergeben.

Jeder hier aufgeführte Zahlenbereich schließt alle darin enthaltenen Unterbereiche ein. Zum Beispiel soll ein Bereich von "1 bis 10" alle Unterbereiche zwischen und einschließlich des angegebenen Minimalwerts von 1 und des angegebenen Maximalwerts von 10 umfassen, d.h. alle Unterbereiche, die mit einem Minimalwert gleich oder größer als 1 beginnen und mit einem Maximalwert gleich oder kleiner als 10 enden, sowie alle Unterbereiche dazwischen, z. B. 1 bis 6,3 oder 5,5 bis 10 oder 2,7 bis 6,1. Alle Endpunkte von Bereichen und/oder Zahlen innerhalb dieser Bereiche können im Rahmen der vorliegenden Offenlegung kombiniert werden.

Der Begriff "umfassend" ist hierin so zu verstehen, dass er offen ist und das Vorhandensein zusätzlicher, nicht beschriebener oder nicht erwähnter Elemente, Materialien, Bestandteile oder Verfahrensschritte usw. nicht ausschließt. Die Begriffe "einschließlich", "enthaltend", "gebildet aus" und ähnliche Begriffe sind als Synonyme für "umfassend" zu verstehen. Der hier verwendete Begriff "bestehend aus" schließt das Vorhandensein nicht spezifizierter Elemente, Inhaltsstoffe, Verfahrensschritte usw. aus. Obwohl die Offenbarung im Sinne von "umfassend" beschrieben wurde, fallen auch "bestehend aus" oder "im Wesentlichen bestehend aus" in den Anwendungsbereich der vorliegenden Offenbarung.

Im Rahmen dieser Offenbarung bedeuten die Formulierungen "im Wesentlichen bestehend aus" und "im Wesentlichen gebildet aus" einem Material, dass die entsprechende Komponente ganz überwiegend aus dem benannten Material gebildet wird und andere Materialien allenfalls in geringen Mengen vorliegen. Die anderen Materialien werden im Allgemeinen nicht absichtlich zugesetzt, sondern stammen, wenn vorhanden, zum Beispiel aus Verunreinigungen oder unvollständigem Abtrennen. Die anderen Materialien sind üblicherweise in so geringen Mengen vorhanden, dass sie die Eigenschaften der betreffenden Komponente nicht merklich beeinflussen. Beispielweise kann mit "im Wesentlichen bestehend aus" und "im Wesentlichen gebildet aus" hierin gemeint sein, dass die jeweilige Komponente, wie etwa die jeweiligen Aggregate, Partikel oder Präpolymere zu 95 Gew.-% oder mehr, bevorzugt zu 99 Gew.-% oder mehr, weiter bevorzugt zu 99,5 Gew.-% oder mehr, besonders bevorzugt zu 99,9 Gew.-% oder mehr aus dem benannten Material gebildet sind oder daraus bestehen.

Die Singularform von "ein", "die", "der" und "das" schließt hierin die Pluralform ein, sofern der Kontext nicht eindeutig etwas anderes vorschreibt.

Die hierin offenbarten Mengenangaben sind in Bezug auf die Bestandteile der erfindungsgemäßen Zusammensetzung in Gew.-% angegeben und beziehen sich auf das Gesamtgewicht der Zusammensetzung, soweit nichts anderes angegeben ist.

Der hierin verwendete Begriff "Polymer" ist so zu verstehen, dass darunter sowohl Homopolymere, das heißt Polymere, die sich von einem Monomertyp ableiten, als auch Copolymere, also solche Polymere, die sich von zwei oder mehr unterschiedlichen Monomertypen ableiten, fallen. Der Begriff "Präpolymer" bezieht sich in diesem Zusammenhang auf ein Polymer, welches, beispielsweise chemisch, thermisch oder mittels Bestrahlung, ggf. unter Verwendung eines Katalysators und/oder eines Vernetzungsmittels, vernetzt und somit ausgehärtet werden kann. Es ist im Sinne der vorliegenden Erfindung bevorzugt, dass das Präpolymer flüssig bzw. fließfähig ist. Das bedeutet, dass fließfähige Präpolymere ebenfalls mittel- bis hochviskose Polymere mit einer Viskosität von 10 mPas bis 100000 mPas (bei 25 °C gemessen bei einer Scherrate von 10 s⁻¹) umfassen können.

Die hierin angeführte Größe der spezifischen Oberfläche oder BET-Oberfläche bezieht sich auf die massenbezogene spezifische Oberfläche und ist, soweit nichts anderes angegeben ist, in g/m² angegeben. Sämtliche hierin offenbarten spezifischen Oberflächen wurden mittels des BET-Analyseverfahrens ermittelt. Die technischen Details dieses Analyseverfahrens sind dem Fachmann bekannt, unter anderem aus der DIN ISO 9277.

Der hierin erwähnte Thixotropieindex wird durch die Formel TI=η(Y'low)/η(Y'high) angegeben, wobei η(Y'low) die Viskosität bei einer niedrigen Scherrate und η(Yhigh) die Viskosität bei einer hohen Scherrate ist. Alle Angaben des Thixotropieindexes hierin sind auf eine niedrige Scherrate von 1 s⁻¹und eine hohe Scherrate von 100 s⁻¹ bezogen. Die jeweiligen Viskositäten sind Viskositäten der jeweiligen Zusammensetzungen umfassend wenigstens ein Präpolymer, thermisch leitfähige Partikel und pyrogenes Aluminiumoxid mit einer BET-Oberfläche von 15 m²/g bis 200 m²/g. Die Messung der Viskositäten erfolgt wie in den Beispielen beschrieben.

Ein thermisch leitender oder thermisch leitfähiger Stoff oder ein solches Material, insbesondere thermisch leitende oder thermisch leitfähige Partikel, kann im Sinne der vorliegenden Erfindung ein Stoff oder ein Material sein, dass eine thermische Leitfähigkeit von wenigstens 1,0 W/mK, vorzugsweise wenigstens 1,5 W/mK, weiter bevorzugt wenigstens 1,8 W/mK aufweist. Methoden zur Messung der thermischen Leitfähigkeit eines Stoffs sind dem Fachmann bekannt. Unter anderem kann die thermische Leitfähigkeit durch Wärmestromkalorimetrie bestimmt werden.

Die hierin beschriebenen Partikel und Aggregate können weiterhin durch die D50-, D10- und/oder D90-Partikelgröße beschrieben werden. Die D50-Partikelgröße, die auch als Medianwert bezeichnet wird, gibt diejenige Partikelgröße der volumenbezogenen Partikelgrößenverteilung an, unterhalb bzw. oberhalb derer 50% aller Partikel liegen. Die D10-Partikelgröße gibt entsprechend diejenige Partikelgröße der volumenbezogenen Partikelgrößenverteilung an, unterhalb derer 10% aller Partikel liegen. Die D90-Partikelgröße gibt entsprechend diejenige Partikelgröße der volumenbezogenen Partikelgrößenverteilung an, unterhalb derer 90% aller Partikel liegen. Die hierin angegebenen Partikel- und Aggregatgrößen beziehen sich, soweit nichts anderes angegeben ist, jeweils auf die D50-Werte der Partikel- bzw. Aggregatgrößenverteilungen, welche mittels Laserbeugung nach ISO 22412:2017 bestimmt wurden.

Die vorliegende erfindungsgemäße Zusammensetzung umfasst wenigstens ein Präpolymer. Dabei kann es sich um ein Präpolymer ausgewählt aus Silikonen, Polyethern, Polyepoxiden, Polyurethanen, Polyacrylaten, Polymethacrylaten, silanmodifizierten Polymeren und Kombinationen daraus, handeln. Vorzugsweise ist das wenigstens eine Präpolymer ausgewählt aus Silikonen. Dabei kann das wenigstens eine Präpolymer, insbesondere endständig, modifiziert sein, d.h. dass das wenigstens eine Präpolymer an wenigstens einer Stelle, vorzugsweise wenigstens zwei Stellen, eine reaktive funktionelle Gruppe aufweist. Diese funktionelle Gruppe kann entweder mit einem Vernetzungsmittel oder einer anderen funktionellen Gruppe des Präpolymers reagieren. Dazu kann, abhängig von der Chemie der Vernetzung, ein Katalysator oder die externe Zufuhr von Energie erforderlich sein.

Entsprechend kann die Zusammensetzung mittels wenigstens eines Vernetzungsmittels, wenigstens eines Katalysators, Erwärmen und/oder Bestrahlung ausgehärtet werden bzw. ausgehärtet sein. Das jeweils anzuwendende Härtungsmittel bzw. -verfahren hängt von dem gewählten Präpolymer ab, wobei mehrere der zuvor genannten Härtungsmittel oder-verfahren gleichzeitig zum Einsatz kommen können. Beispielsweise kann ein Silikonpräpolymer endständig mit Vinylgruppen modifiziert sein, welche in Gegenwart eines Platinkatalysators bei erhöhter Temperatur mit einem SiH-Vernetzungsmittel reagieren und somit die Zusammensetzung aushärten.

Entsprechend kann die die Gesamtmenge des wenigsten einen Präpolymers, abhängig von dem/den eingesetzten Präpolymer(en) oder dem verwendeten Härtungsverfahren, aus einer oder mehreren Komponenten bestehen. So kann beispielsweise ein mittels eines Vernetzungsmittels und eines Katalysators auszuhärtendes Präpolymer aus zwei Komponenten bestehen. Dabei kann die erste Komponente einen Teil des Präpolymers und darin gelöst oder dispergiert das Vernetzungsmittel umfassen, während die zweite Komponente einen anderen Teil des Präpolymers und darin gelöst oder dispergiert den Katalysator umfassen kann.

Das wenigstens eine Präpolymer kann in einer Gesamtmenge von 1 Gew.-% bis 75 Gew.-%, vorzugsweise 5 Gew.-% bis 50 Gew.-% in der erfindungsgemäßen Zusammensetzung vorhanden sein.

Ein zweiter Bestandteil der erfindungsgemäßen Zusammensetzung sind thermisch leitfähige Partikel. Diese thermisch leitfähigen Partikel können ausgewählt sein aus Graphen, Quarz, Aluminiumnitrid, Bornitrid, Siliziumcarbid Aluminiumoxid mit einer BET- Oberfläche von 0,01 m²/g bis 20 m²/g und Kombinationen daraus. Es ist insbesondere bevorzugt, dass Aluminiumoxid mit einer BET-Oberfläche von 0,01 m²/g bis 20 m²/g, besonders bevorzugt sind die thermisch leitfähigen Partikel ausgewählt aus Aluminiumoxid mit einer BET-Oberfläche von 0,05 bis 15 m²/g. Diese Aluminiumoxid-Fraktion ist, falls vorhanden, von der Fraktion des erfindungsgemäßen pyrogenen Aluminiumoxids, welches als Antiabsetzmittel fungiert, zu unterscheiden. Falls es sich bei den thermisch leitfähigen Partikeln um Aluminiumoxidpartikel handelt, liegen somit zwei unterschiedliche Fraktionen an Aluminiumoxid in der Zusammensetzung vor. Insbesondere können sich das pyrogene Aluminiumoxid und das Aluminiumoxid, falls dieses in als thermisch leitfähiges Material in der Zusammensetzung vorhanden ist, in ihrer BET-Oberfläche unterscheiden. Zusätzlich können sich die beiden Aluminiumoxid-Fraktionen in der mittleren Partikelgröße oder der Form der Partikel unterscheiden.

Die thermisch leitfähigen Partikel können vorzugsweise in Form von sphärischen Partikeln vorliegen. Sphärische Partikel eignen sich durch dichte Kugelpackungen besonders für die Anwendung in thermisch leitfähigen Kunstoffen. Diese Partikel können eine Größe von 0,1 µm bis 200 µm, vorzugsweise 0,5 µm bis 150 µm, aufweisen. Besonders vorteilhaft umfassen die thermisch leitfähigen Partikel wenigstens erste und zweite Fraktion thermisch leitfähiger Partikel, wobei die erste Fraktion thermisch leitfähiger Partikel eine D50-Größe umfasst, die mindestens um den Faktor 5, vorzugsweise mindestens um den Faktor 10, weiter bevorzugt mindestens um den Faktor 15, kleiner ist, als die D50-Größe der Fraktion zweiter thermisch leitfähiger Partikel. Dies sorgt für eine besonders dichte Packung der thermisch leitfähigen Partikel, was die thermische Leitfähigkeit der ausgehärteten Zusammensetzung verbessert. Um eine besonders dichte Packung zu erzielen ist es bevorzugt, wenn die erste und die zweite Fraktion thermisch leitfähiger Partikel in einem Mengenverhältnis von 7 zu 3 bis 3 zu 7, vorzugsweise ein einem Mengenverhältnis von 6 zu 4 bis 4 zu 6, vorliegen.

Die thermisch leitfähigen Partikel können in einer Gesamtmenge von 30 Gew.-% bis 95 Gew.-%, vorzugsweise 50 Gew.-% bis 95 Gew.-% in der Zusammensetzung vorhanden sein.

Wie bereits beschrieben, kann die oben genannte Aufgabe durch das erfindungsgemäße Hinzufügen von pyrogenem Aluminiumoxid mit einer BET-Oberfläche von 15 m²/g bis 200 m²/g mit einem Anteil von weniger als 5 Gew.-%, bezogen auf die Zusammensetzung, zu einer Zusammensetzung gelöst werden.

Vorzugsweise liegt das pyrogene Aluminiumoxid in Form von Aggregaten vor. Dem Fachmann ist bekannt, dass es sich bei solchen Aggregaten um zusammengelagerte Primärpartikel handelt, die durch Sinterung zusammengehalten werden. Diese Primärpartikel sollten vorzugsweise im Verhältnis zu den Aggregaten klein sein. Die Größe der Primärpartikel, aus denen die Aggregate gebildet sind, ist daher vorzugsweise wenigstens um den Faktor 10, besonders bevorzugt um den Faktor 25, kleiner als die Größe der Aggregate. Darüber hinaus ist es bevorzugt, dass die Aggregate eine mittlere Größe von 50 nm bis 1 µm, vorzugsweise 100 bis 800 nm, aufweisen. Sollten die Aggregate zu klein sein, wird die Viskosität bei niedrigen Scherraten negativ beeinflusst. Sind die Aggregate jedoch größer als 1 µm, können die Aggregate selbst zur Sedimentation neigen. Das pyrogene Aluminiumoxid weist eine BET-Oberfläche von 15 m²/g bis 200 m²/g, vorzugsweise von 25 m²/g bis 200 m²/g, auf.

Das Verhältnis zwischen BET-Oberfläche und Aggregatgröße des pyrogenen Aluminiumoxids kann zudem durch den Effizienzindex dargestellt werden. Dieser Wert ergibt sich durch das Produkt der Aggregatgröße und der BET-Oberfläche der Aggregate (dAgg x BET) und wird in mm³/kg angegeben. Für eine besonders effiziente Inhibierung der Sedimentation der thermisch leitenden Partikel in der Zusammensetzung kann der Effizienzindex des pyrogenen Aluminiumoxids vorzugsweise zwischen 3 mm³/kg und 100 mm³/kg liegen.

Das erfindungsgemäße pyrogene Aluminiumoxid kann außerdem hydrophob modifiziert sein. Durch eine hydrophobe Modifikation kann die Kompatibilität des Antiabsetzmittels mit der Präpolymermatrix erhöht und somit eine verbesserte Einarbeitbarkeit und Dispergierbarkeit gegenüber unmodifiziertem pyrogenem Aluminiumoxid erzielt werden. Das pyrogene Aluminiumoxid kann beispielsweise mit Silikonöl, Octamethylcyclotetrasiloxan, Hexamethyldisilazan, Dimethyldichlorosilan, oder Kombinationen daraus modifiziert sein.

Des pyrogene Aluminiumoxid kann in einer Gesamtmenge von 0,05 Gew.-% bis 5 Gew.-%, bezogen auf die Zusammensetzung, vorzugsweise 0,1 bis 4 Gew.-%, insbesondere bevorzugt 0,3 bis 3 Gew.-% in der erfindungsgemäßen Zusammensetzung vorhanden sein.

Die erfindungsgemäße Zusammensetzung kann sich vorteilhaft durch einen Thixotropieindex TI von 6 bis 80, vorzugsweise 10 bis 50, auszeichnen. Ein solcher Thixotropieindex begünstigt, dass bereits bei kleinen Zugaben des erfindungsgemäßen pyrogenen Aluminiumoxids die Viskosität der Zusammensetzung bei kleinen Scherraten stark erhöhen können, was die Sedimentation der thermisch leitfähigen Partikel während der Lagerung der Zusammensetzung stark verringert, oder idealerweise vollständig verhindert. Zudem steigt die Viskosität bei hohen Scherraten jedoch nur gering an, was eine gute Dosierbarkeit und Verarbeitung der Zusammensetzung ermöglicht.

Die erfindungsgemäße Zusammensetzung kann, neben den zuvor beschriebenen, auch weitere Bestandteile als Additive enthalten. Als Additive können zum Beispiel organische und anorganische Pigmente, Farbstoffe, pH-Wert-Regler, Flammschutzmittel, Suszeptoren, Stabilisatoren, Prozesshilfsmittel oder Mischungen und Kombinationen derselben verwendet werden. Exemplarische Pigmente stellen etwa Titandioxid, Ferrite, Zirkoniumdioxid, und Ruße dar. Als Stabilisatoren eignen sich etwa Phenole, insbesondere sterisch gehinderte Phenole. Es kann ein Additiv oder eine Mischung mehrerer Additive in dem erfindungsgemäßen Pulver enthalten sein. Das jeweilige Additiv wird jeweils in für den gewünschten Einsatzzweck geeigneter Menge eingesetzt. Gängige Einsatzmengen sind dem Fachmann bekannt. Die Gesamtmenge an Additiven, bezogen auf das Gesamtgewicht der Zusammensetzung, kann beispielsweise bis zu 10 Gew.-%, bis zu 6 Gew.-%, bis zu 3 Gew.-%, bis zu 2 Gew.-%, bis zu 1 Gew.-%, bis zu 0,5 Gew.-%, bis zu 0,25 Gew.-%, bis zu 0,2 Gew.-%, bis zu 0,1 Gew.-%, oder bis zu 0,05 Gew.-% betragen. In einer bevorzugten Praxis der vorliegenden Erfindung enthält die erfindungsgemäße Zusammensetzung im Wesentlichen kein Additiv; das heißt, Additive liegen, wenn überhaupt, nur als Verunreinigungen in der Zusammensetzung vor. In einer weiteren bevorzugten Praxis der vorliegenden Erfindung enthält die erfindungsgemäße Zusammensetzung kein Additiv.

Ein weiter Gegenstand der vorliegenden Erfindung ist ein Verfahren zur Herstellung einer thermisch leitfähigen Zusammensetzung, dadurch gekennzeichnet, dass das Verfahren einen Schritt des Hinzufügens von weniger als 5 Gew.-%, bezogen auf die Zusammensetzung, pyrogenem Aluminiumoxid mit einer BET-Oberfläche von 15 m²/g bis 200 m²/g zu der Zusammensetzung umfasst.

Dabei kann das pyrogene Aluminiumoxid vor, nach oder parallel zu den thermisch leitfähigen Partikeln in die Zusammensetzung eingearbeitet werden. Daher kann das erfindungsgemäße Verfahren einen Schritt des Vorlegens oder Hinzufügens des pyrogenen Aluminiumoxids zu den thermisch leitfähigen Partikeln umfassen, wobei die das pyrogene Aluminiumoxid bevorzugt mit den thermisch leitfähigen Partikeln homogen vermischt wird. Dafür können dem Fachmann bekannte Trockenmischverfahren verwendet werden. Das Einarbeiten des pyrogenen Aluminiumoxids und/oder der thermisch leitfähigen Partikel kann mittels gängiger Mischtechniken für (rieselfähige) Feststoffe und flüssige oder viskose Polymerwerkstoffe erfolgen, beispielsweise durch Compoundieren.

Abhängig von dem eingesetzten Präpolymer kann die erfindungsgemäße Zusammensetzung für eine Vielzahl von technischen Anwendungen eingesetzt werden. Diese können unter anderem Klebstoffe, Füllmassen, Dichtstoffe sowie thermisch leitfähige Artikel und Bauteile umfassen.

Dazu kann die erfindungsgemäße Zusammensetzung mittels gängiger Techniken wie Pressen, (Spritz-)Gießen oder Formen, ggf. bei erhöhten Temperaturen und/oder erhöhtem Druck zu Artikeln oder Bauteilen geformt und gleichzeitig ausgehärtet werden. In einer alternativen Praxis kann die erfindungsgemäße Zusammensetzung im nichtgehärteten Zustand auf zumindest einen Teil einer Oberfläche eines Artikels oder Bauteils aufgebracht werden und im Folgenden einem Aushärtungsverfahren wie oben beschrieben unterzogen werden.

Die folgenden Beispiele sollen die erfindungsgemäße Zusammensetzung sowie deren Herstellung und die erfindungsgemäße Verwendung beschreiben, ohne die Erfindung auf die Beispiele einzuschränken.

### BEISPIELE

### Herstellung der Formulierung

### Zusammensetzung 1 (Basisformulierung) (nicht erfindungsgemäß)

8,12 Gew.-% Silikon-Polymer VS 200 von Evonik
86 Gew.-% Sphärische Aluminiumoxid-Partikel BAK-40(40µm)/BAK-2(2µm) 60/40 von Bestry
3,52 Gew.-% Inhibitormischung 1-Ethynyl-1-cyclohexanol von Aldrich (als 2%ige Mischung in Silikon-Polymer VS 200)
0,6 Gew.-% KAT 511 Platin-Katalysator von Evonik (als 10%ige Mischung in Silikon-Polymer VS 200)
1,76 Gew.-% SiH-Vernetzer Crosslinker 100 von Momentive

### Zusammensetzung 2 (erfindungsgemäß)

6,12 Gew.-% Silikon-Polymer VS 200 von Evonik
86 Gew.-% Sphärische Aluminiumoxid-Partikel BAK-40(40µm)/BAK-2(2µm) 60/40 von Bestry
2 Gew.-% Aluminiumoxid-Partikel (AEROXIDE^{®} Alu C 805 oder Alu 45, Evonik Industries). Dabei entspricht AEROXIDE^{®} Alu C 805 einem wie oben beschrieben oberflächen-modifizierten pyrogenen Aluminiumoxid, während AEROXIDE^{®} Alu 45 nicht modifiziert ist.
3,52 Gew.-% Inhibitormischung 1-Ethynyl-1-cyclohexanol von Aldrich (als 2%ige Mischung in Silikon-Polymer VS 200)
0,6 Gew.-% KAT 511 Platin-Katalysator von Evonik (als 10%ige Mischung in Silikon-Polymer VS 200)
1,76 Gew.-% SiH-Vernetzer Crosslinker 100 von Momentive

### Dry-Mixing von Füllstoffen

Die Füllstoffe (BAK-40/BAK-2 60/40 oder BAK-40/BAK-2 60/40 + Aluminiumoxid-Partikel) werden vorab im Dry-Mixing-Verfahren in einem Hauschild Speedmixer gemischt. Dabei werden die Füllstoffe in einen Speedmixer-Becher eingewogen und für 4 min bei 2000 min-1 homogenisiert, ggf. aufgrund der Erwärmung in bis zu 5 Etappen.

### Herstellung der Compounds

Zunächst werden 6,12 Gew.-% Silikon-Polymer VS 200, 3,52 Gew.-% Inhibitormischung 1-Ethynyl-1-cyclohexanol und 0,6 Gew.-% KAT 511 Platin-Katalysator in dem Hauschild Speedmixer für 15s bei 2000 min-1 gemischt. Danach wird die Füllstoffmischung aus dem Dry-Mixing Prozess (BAK-40/BAK-2 60/40 oder BAK-40/BAK-2 60/40 + Aluminiumoxid-Partikel) 4 x für je 60s bei 2000 min-1 dispergiert. Anschließend wird 1,76 Gew.-% SiH-Vernetzer Crosslinker 100 2 x für je 30s bei 2000 min-1 dazu gemischt.

### Herstellung der Prüfkörper

Die Vernetzung von Prüfkörpern der Compounds mit 6 mm Dicke und einem Durchmesser von 55mm findet in einer Heißpresse unter einem Druck von 100 bar und einer Temperatur von 120°C über 10 Minuten statt. Anschließend werden die Prüfkörper im Ofen für 4 Stunden bei 200°C nachvernetzt.

### Ermittlung des Thixotropie-Indexes

Ermittlung der rheologischen Eigenschaften von Flüssigsilicon mit Aluminiumoxid als Füllstoff. Viskosität [Pa*s] beschreibt die Eigenschaft eines Stoffes, unter Einwirkung einer Spannung zu fließen (viskos = zähflüssig) und irreversibel deformiert zu werden. Die Scherrate ergibt sich aus der Funktion aus der Geschwindigkeit [m/s] des Messkegels und des Abstandes [m] zwischen Messkegel und Platte.

Die Proben des gefüllten Flüssigsilikon müssen vor der Viskositätsmessung mindestens 4 Stunden im Messraum gelagert werden, um die Umgebungstemperatur zu erreichen. Es wird ein Rheometer Haake RheoStress 1 der Fa. Thermo Scientific mit dem Steuerprogramm RheoWin verwendet. Die Messung wird durch die Drehzahl, d.h. durch die Scherrate von 1 s⁻¹ bis 100 s⁻¹reguliert. Es wird ein Kegel mit der Messgeometrie C20/2° Ti und dem Messplattenaufsatz MPC 35 eingesetzt bei einem Kegel-Platte Spaltabstand von 0,105 mm.

### Messung thermische Leitfähigkeit

Die thermische Leitfähigkeit der vernetzten Prüfkörper wurde nach ASTM D7984, mit einer auf der Transient Plane Source-Methode basierenden Messtechnik zur Bestimmung der Wärmeleitfähigkeit ermittelt.

### Messung Aggregatgröße

Zur Messung von hydrophilen Aggregaten von z. B. AEROXIDE^{®} Alu 45 wird eine 1 Gew.-% Dispersion in Wasser hergestellt. 0,2 g des hydrophilen Materials wird in einem 20 ml Beschallungsgefäß vorgelegt und 19,8 g VE Wasser dazugeben. Ein handelsüblicher Ultraschallfinger wird zur Dispergierung benutzt. Der Dispergier-Finger wird 1,5 cm in die Dispersion eingetaucht. Die Probe wird fünf Minuten mit halber Leistung des Equipments beschallt.

Zur Messung von hydrophoben Aggregaten von z. B. AEROXIDE^{®} Alu C 805 wird eine 1 wt% Dispersion in Ethanol hergestellt. 0,2 g des hydrophoben Materials wird in einem 20 ml Beschallungsgefäß vorgelegt. Es wird 20 g Ethanol mit 40 mg eines hochmolekularen Benetzungsadditives dazugeben. Ein handelsüblicher Ultraschallfinger wird zur Dispergierung benutzt. Der Dispergier-Finger wird 1,5 cm in die Dispersion eingetaucht. Die Probe wird fünf Minuten mit halber Leistung des Equipments beschallt.

Abhängig von der optischen Dichte wird 500-2500 mg der Dispersion in eine Küvette geben und mit dem das Dispersionsmedium auf 2500mg aufgefüllt. Diese Küvette wird danach zur Messung der Größenverteilung der Aggregate verwendet. Zur Messung wird ein dynamisches Lichtstreugerät nach ISO 22412:2017 benutzt.

### Ergebnisse

| | Basisformulierung + Additiv | Aggregatdurchmesser (nm) Additiv | BET (m²/g) | Effizienzindex (d_{agg} × BET) in mm³/kg | Viskosität (Pas) bei 1 s⁻¹ | Viskosität (Pas) bei 10 s⁻¹ | Viskosität (Pas) bei 100 s⁻¹ | Thixotropieindex η(1 s⁻¹)/η(100 s⁻¹) | Thermische Leitfähigkeit (W/m K) | Visuelle Beobachtung der Sedimentationsneigung, Verarbeitbarkeit |
|---|---|---|---|---|---|---|---|---|---|---|
| | Basisformulierung: 86 Gew.-% BAK-40/BAK-2 im Verh. 60/40 | | | | | | | | | |
| Ref. | Basisformulierung | - | - | - | 19,2 | 6,2 | 4,4 | 4,4 | 2,2 | Sehr schnelles Absetzen |
| Ref. 2 | Basisformulierung + 2 Gew.-% BAK-40/BAK-2 im Verh. 60/40 | - | - | - | 35,4 | 12,3 | 6,1 | 5,8 | 2,7 | Schnelles Absetzen |
| Bsp. 1 | Basisformulierung + 2 Gew.-% AEROXIDE^{®} Alu C 805 | 170 | 100 | 17 | 516,2 | 62,7 | 12,9 | 40,0 (sehr hoch) | 2,5 | Sehr hohe Effizienz (starke Wirkung) Kein Absedimentieren, gute Verarbeitbarkeit |
| Bsp. 2 | Basisformulierung + 2 Gew.-% AEROXIDE^{®} Alu 45 | 260 | 45 | 11,7 | 156,8 | 20,1 | 7,3 | 21,5 (hoch) | 2,5 | Sehr hohe Effizienz (starke Wirkung) Kein Absedimentieren, gute Verarbeitbarkeit |
| Bsp. 3 | Basisformulierung + 2 Gew.-% Aluminiumoxid-Partikel hergestellt auf einem Metallpulverrohstoff in einer heißen Flamme | 226 | 15 | 3,4 | 63,6 | 13,5 | 6,1 | 10,4 (mittel) | 2,5 | Mittlere Effizienz gegen Sedimentation |
| Ref. 3 | Basisformulierung + 2 Gew.-% Submikrometer kalzinierte und gemahlene Aluminiumoxid-Partikel | 360 | 7,8 | 2,8 | 35,6 | 12,8 | 6,1 | 5,8 (gering) | 2,5 | Geringe Effizienz gegen Sedimentation |
| Ref. 4 | Basisformulierung + 5 Gew.-% AEROXIDE^{®} Alu C 805 | 170 | 100 | 17 | 2314 | 308 | 32 | 72,3 (sehr hoch) | 2,8 | Sehr hohe Effizienz (starke Wirkung) Kein Absedimentieren, aber keine Verarbeitbarkeit aufgrund zu höher Viskosität bei 10 s⁻¹. |
| Ref. 5 | Basisformulierung + 5 Gew.-% AEROXIDE^{®} Alu 45 | 260 | 45 | 11,7 | 796 | 120 | 1 | 796 (sehr hoch) | 3,2 | Sehr hohe Effizienz (starke Wirkung) Kein Absedimentieren, aber schlechte Verarbeitbarkeit aufgrund zu höher Viskosität bei 10 s⁻¹. |

Aus der Tabelle kann man erkennen, dass Produkte umfassend pyrogenes Aluminiumoxid mit einer BET-Oberfläche im erfindungsgemäßen Bereich trotz geringer Einsatzmenge eine besonders hohe Effizienz aufweisen, ohne dabei Einbußen bei der thermischen Leitfähigkeit des fertigen Produktes in Kauf nehmen zu müssen. Dies ist insbesondere der Fall, wenn sie zusätzlich hydrophobiert sind.

## Patentansprüche

1. Zusammensetzung umfassend wenigstens ein Präpolymer und wenigstens eine Fraktion thermisch leitfähiger Partikel, **dadurch gekennzeichnet, dass** die Zusammensetzung zusätzlich pyrogenes Aluminiumoxid mit einer BET-Oberfläche von 15 m²/g bis 200 m²/g (DIN ISO 9277) mit einem Anteil von weniger als 5 Gew.-%, bezogen auf die Zusammensetzung, umfasst.

2. Zusammensetzung gemäß Anspruch 1, **dadurch gekennzeichnet, dass** das pyrogene Aluminiumoxid eine Aggregatgröße von 50 nm bis 1 µm (Laserbeugung nach ISO 22412:2017), vorzugsweise 100 nm bis 800 nm aufweist.

3. Zusammensetzung gemäß einem der vorhergehenden Ansprüche, **dadurch gekennzeichnet, dass** das pyrogene Aluminiumoxid einen Effizienzindex von 3 mm³/kg bis 100 mm³/kg aufweist, wobei der Effizienzindex das Produkt aus Aggregatgröße und BET-Oberfläche ist.

4. Zusammensetzung gemäß einem der vorhergehenden Ansprüche, **dadurch gekennzeichnet, dass** die Zusammensetzung
• 1 Gew.-% bis 75 Gew.-%, vorzugsweise 5 Gew.-% bis 50 Gew.-%, wenigstens eines Präpolymers,
• 30 Gew.-% bis 95 Gew.-%, vorzugsweise 50 Gew.-% bis 95 Gew.-%, wärmeleitende Partikel, und/oder
• 0,05 Gew.-% bis 5 Gew.-%, vorzugsweise 0,1 Gew.-% bis 4 Gew.-%, pyrogenes Aluminiumoxid
umfasst.

5. Zusammensetzung gemäß einem der vorhergehenden Ansprüche, **dadurch gekennzeichnet, dass** das Präpolymer ausgewählt ist aus Silikonen, Polyethern, Polyepoxiden, Polyurethanen, Poly(meth)acrylaten, silanmodifizierten Polymeren und Kombinationen daraus, vorzugsweise ausgewählt aus Silikonen.

6. Zusammensetzung gemäß einem der vorhergehenden Ansprüche, **dadurch gekennzeichnet, dass** die thermisch leitfähigen Partikel ausgewählt sind aus Graphen, Quarz, Aluminiumnitrid, Bornitrid, Siliziumcarbid Aluminiumoxid mit einer BET-Oberfläche von 0,01 m²/g bis 20 m²/g, und Kombinationen daraus.

7. Zusammensetzung gemäß Anspruch 6, **dadurch gekennzeichnet, dass** die thermisch leitfähigen Partikel ausgewählt sind aus Aluminiumoxid mit einer BET-Oberfläche von 0,01 m²/g bis 20 m²/g, vorzugweise 0,05 m²/g bis 15 m²/g.

8. Zusammensetzung gemäß einem der vorhergehenden Ansprüche, **dadurch gekennzeichnet, dass** die thermisch leitfähigen Partikel in Form von sphärischen Partikeln vorliegen.

9. Zusammensetzung gemäß Anspruch 8, **dadurch gekennzeichnet, dass** die sphärischen Partikel eine Größe von 0,1 µm bis 200 µm, vorzugsweise 0,5 µm bis 150 µm, aufweisen.

10. Zusammensetzung gemäß einem der vorhergehenden Ansprüche, **dadurch gekennzeichnet, dass** das pyrogene Aluminiumoxid hydrophob modifiziert ist.

11. Zusammensetzung gemäß Anspruch 10, **dadurch gekennzeichnet, dass** das pyrogene Aluminiumoxid mit Silikonöl, Octamethylcyclotetrasiloxan, Hexamethyldisilazan, Dimethyldichlorosilan, oder Kombinationen daraus modifiziert ist.

12. Zusammensetzung gemäß einem der vorhergehenden Ansprüche, **dadurch gekennzeichnet, dass** die thermisch leitfähigen Partikel wenigstens eine erste und eine zweite Fraktion thermisch leitfähiger Partikel umfassen, wobei die erste Fraktion Partikel einer D50-Größe umfassen, die mindestens um den Faktor 5, vorzugsweise mindestens um den Faktor 10, weiter bevorzugt mindestens um den Faktor 15, kleiner ist als die D50-Größe der Partikel der zweiten Fraktion.

13. Zusammensetzung gemäß einem der vorhergehenden Ansprüche, **dadurch gekennzeichnet, dass** die Zusammensetzung mittels wenigstens eines Vernetzungsmittels, wenigstens eines Katalysators, Erwärmen und/oder Bestrahlung ausgehärtet ist.

14. Verfahren zur Herstellung einer thermisch leitfähigen Polymerzusammensetzung, **dadurch gekennzeichnet, dass** das Verfahren einen Schritt des Hinzufügens von weniger als 5 Gew.-%, bezogen auf die Zusammensetzung, pyrogenem Aluminiumoxid mit einer BET-Oberfläche von 15 m²/g bis 200 m²/g zu der Zusammensetzung umfasst.

15. Verwendung von pyrogenem Aluminiumoxid mit einer BET-Oberfläche von 15 m²/g bis 200 m²/g zur Verringerung der Sedimentation von thermisch leitfähigen Partikeln in Polymerzusammensetzungen.
